(19) Europäisches Patentamt
European Patent Office
Office européen des brevets

(11) **EP 3 183 127 B1**

(12) **EUROPÄISCHE PATENTSCHRIFT**

(45) Veröffentlichungstag und Bekanntmachung des Hinweises auf die Patenterteilung:
**06.03.2019 Patentblatt 2019/10**

(21) Anmeldenummer: **15730091.4**

(22) Anmeldetag: **09.06.2015**

(51) Int Cl.:
**B60C 11/03** (2006.01)   **B60C 11/13** (2006.01)

(86) Internationale Anmeldenummer:
**PCT/EP2015/062748**

(87) Internationale Veröffentlichungsnummer:
**WO 2016/026593 (25.02.2016 Gazette 2016/08)**

(54) **FAHRZEUGLUFTREIFEN**

PNEUMATIC VEHICLE TYRE

PNEUMATIQUE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.08.2014 DE 102014216798**

(43) Veröffentlichungstag der Anmeldung:
**28.06.2017 Patentblatt 2017/26**

(73) Patentinhaber: **Continental Reifen Deutschland GmbH**
**30165 Hannover (DE)**

(72) Erfinder:
• **FRIES, Volkmar**
**30900 Wedemark (DE)**
• **WIES, Burkhard**
**30455 Hannover (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
**EP-A1- 2 631 088     DE-T5-112011 105 508**
**JP-A- S58 136 502     US-A- 5 450 885**

**Beschreibung**

Die Erfindung betrifft einen Fahrzeugluftreifen in Radialbauart mit einem Laufstreifen mit sich in Umfangsrichtung erstreckenden Profilpositiven, welche voneinander durch zumindest eine in Umfangsrichtung umlaufende Rille getrennt sind, welche von zwei einander gegenüberliegenden Rillenflanken und einem die Rillenflanken verbindenden gekrümmten Rillengrund begrenzt sind, wobei, im Querschnitt betrachtet, die Krümmung des Rillengrundes vom tiefsten Punkt des Rillengrundes bis zu den Rillenflanken zunimmt.

Es ist bekannt, dass am Rillengrund von in Umfangsrichtung orientierten Rillen in Laufstreifen von Fahrzeugluftreifen während des Betriebes infolge der auftretenden Verformungen hohe Zugspannungen wirken. Durch diese Zugspannungen sind die Rillengründe anfällig für das Auftreten von Alterungsrissen und sogenannten "Groove Cracks". Bei Alterungsrissen handelt es sich um viele parallel zueinander verlaufende Risse geringer Tiefe. Unter "Groove Cracks" werden Risse größerer Tiefe verstanden. Darüber hinaus können im Rillengrund unter Druck oberflächliche "Compression Folds" (Falten mit glatter Oberfläche) entstehen. Die genannten Phänomene können einzeln oder in Kombination miteinander auftreten und auch ineinander übergehen. So bewirken entstandene Alterungsrisse oft eine nachfolgende Bildung von "Groove Cracks".

Üblicherweise werden Umfangsrillen in Laufstreifen als "Rundrillen" ausgeführt. Rundrillen weisen, im Querschnitt betrachtet, einen halbkreisförmigen Rillengrund sowie gerade und im Wesentlichen in radialer Richtung verlaufende Rillenflanken auf. Durch eine Vergrößerung des Radius des Kreises, welcher den halbkreisförmigen Verlauf vorgibt, kann die auftretende Zugspannung auf einen breiteren Bereich des Rillengrundes verteilt werden. Die konstante Krümmung des Rillengrundes führt jedoch zu einer Konzentration der von den benachbarten Profilelementen, beispielsweise Profilrippen, eingeleiteten Zugspannungen in den Bereich der tiefsten Stelle der Rille, wodurch das Auftreten von Alterungsrissen und "Groove Cracks" am Rillengrund begünstigt wird.

Es ist ferner bekannt, Rillen als sogenannten "Trogrillen" auszuführen. Diese weisen, im Querschnitt betrachtet, einen geraden Rillengrund und als Kreisbögen ausgebildete Übergangsbereiche zu den Rillenflanken auf. Der gerade ausgeführte Rillengrund führt zu einer Aufteilung der von den der Rille benachbart angeordneten Profilelementen eingeleiteten Spannungen, welche sich in den stark gekrümmten Übergangsbereichen konzentrieren. Dadurch treten in den Übergangsbereichen vermehrt Alterungsrisse, "Groove Cracks" und "Compression Folds" auf.

Ein Fahrzeugluftreifen der eingangs genannten Art ist beispielsweise aus der DE 11 2011 105 508 T5 bekannt. Dieser Fahrzeugluftreifen soll eine verbesserte Rissbeständigkeit aufweisen, indem im Laufstreifen als Rundrillen ausgebildete Umfangsrillen mit verschiedenen Krümmungsradien vorgesehen sind, wobei axial weiter außen liegende Umfangsrillen einen größeren Krümmungsradius als axial weiter innen liegende aufweisen. Offenbart ist ferner eine Umfangsrille mit einem Rillengrund, welcher einen zentralen Abschnitt und zwei den Rillengrund mit den Rillenflanken verbindende Übergangsabschnitte aufweist, wobei diese Abschnitte entlang von Kreisbögen gekrümmt sind.

Aus der DE 36 19 149 A1 ist ein Fahrzeugluftreifen bekannt, dessen Laufstreifen zumindest eine in ihrem Rillengrund gekrümmte Rille aufweist, wobei die Rille, im Querschnitt betrachtet, zu einer durch ihren tiefsten Punkt (Rillenscheitel) gehenden und in radialer Richtung verlaufenden geraden Linie symmetrisch oder asymmetrisch ausgeführt sein kann. Wird der Rillengrund durch diese Linie als in zwei Hälften geteilt betrachtet, setzt sich jede Hälfte im Querschnitt aus drei Kreisbögen verschiedener Radien sowie einem geraden Abschnitt zwischen den zwei näher zum Rillenscheitel befindlichen Kreisbögen zusammen. Die Radien der den Kreisbögen zugrundeliegenden Kreise nehmen hierbei vom Scheitelpunkt zu den Flanken der Rille ab. In derart ausgeführten Rillen sollen die maximal auftretenden Spannungen geringer sein.

Die DE 10 2007 026 653 B4 offenbart einen Fahrzeugluftreifen mit einem Laufstreifen, dessen Rillen durch einen aus zwei Flächen bestehenden Rillengrund, an welchen beidseitig Rillenflanken angrenzen, gekennzeichnet sind. Zwischen dem Rillengrund und dem Reifengürtel ist eine Unterprofilschicht vorhanden. Bei der Herstellung solcher Fahrzeugluftreifen kommt es unterhalb der Rillen zu unerwünschten Materialanhäufungen, die zu Verformungen der Unterprofilschicht und damit des Gürtels führen, was sich negativ auf die Lebensdauer des Reifens auswirkt. Die Materialanhäufung soll dadurch verhindert werden, dass die beiden Flächen des Rillengrundes miteinander einen Winkel zwischen 140° und 160° einschließen, wodurch die Rille einen keilförmigen Querschnitt aufweist.

Aus der EP 2 631 088 A1 ist ein Schwerlastreifen bekannt, welcher einen Laufstreifen mit mindestens 35 mm tiefen in Umfangsrichtung umlaufenden Rillen aufweist, deren Rillengrund, im Querschnitt betrachtet, entlang zweier Radien gekrümmt ist, wobei der weiter laufstreifeninnenseitig verlaufende Radius größer ist als der weiter laufstreifenaußenseitig verlaufende Radius.

Die US 5 450 885 A offenbart einen Fahrzeugluftreifen mit einem Laufstreifen mit in Umfangsrichtung umlaufenden Rillen, welche einen im Querschnitt zumindest abschnittsweise gekrümmten und bezüglich seines tiefsten Punktes symmetrisch ausgeführten Rillengrund aufweisen. An den Rillengrund schließen, im Querschnitt der Rille betrachtet, gekrümmte Rillenflanken an. Ein Laufstreifen mit solchen Rillen soll dem Reifen ein geringes Abrollgeräusch verleihen.

Aus der JP S58 136502 A ist ein Fahrzeugluftreifen mit einem Laufstreifen mit in Umfangsrichtung umlaufenden Rillen bekannt, welche, im Querschnitt betrachtet, einen radial äußeren Abschnitt mit parallel zueinander verlaufenden Rillenflanken und einen oval gekrümmten radial inneren Abschnitt aufweisen. Diese Rillen sollen für den Abriebwiderstand des Laufstreifens von Vorteil sein.

Die bekannten Lösungsvorschläge zur Verminderung der Rissanfälligkeit des Rillengrundes von Umfangsrillen bringen nicht den gewünschten Erfolg. Es besteht daher nach wie vor der Wunsch nach einer Rillengeometrie, bei der die oben angesprochenen Risse und Schäden, auch bei höherer Laufleistung, nicht mehr bzw. weitgehend nicht mehr auftreten. Der Erfindung liegt daher die Aufgabe zu Grunde, Umfangsrillen im Laufstreifen entsprechend zu gestalten.

Gemäß einer ersten Alternative der Erfindung weist der Rillengrund einen zentralen Abschnitt und zwei den Rillengrund mit den Rillenflanken verbindende Übergangsabschnitte auf, welche Abschnitte entlang von Kreisbögen gekrümmt sind, wobei die gestellte Aufgabe dadurch gelöst wird,

dass der dem Kreisbogen des zentralen Abschnittes zugrundeliegende Kreis einen Radius von 4,0 mm bis 10,0 mm aufweist, wobei dieser Radius zumindest dem Zweifachen des Radius des dem Kreisbogen der Übergangsabschnitte zugrundeliegenden Kreises entspricht.

Gemäß einer zweiten Alternative der Erfindung wird die gestellte Aufgabe dadurch gelöst, dass der Rillengrund, im Querschnitt betrachtet, gemäß einem Teilstück einer Ellipse gekrümmt ist.

In erfindungsgemäß ausgeführte Rillen können durch die spezielle Krümmung die im Betrieb des Reifens auftretenden Zugspannungen gleichmäßig über den gesamten Rillengrund verteilt werden, wodurch die oben erwähnten Schäden nicht mehr oder kaum mehr auftreten.

Die erste Alternative gestattet eine besonders günstige Auslegung des Krümmungsverlaufes des Rillengrundes, um das Entstehen von Alterungsrissen und "Groove Cracks" zu vermeiden. Besonders vorteilhaft ist es, der Radius des Kreises, welcher dem Kreisbogen des zentralen Abschnittes zugrunde liegt, bis zu 7,0 mm beträgt.

Bei der zweiten Alternative ist es besonders günstig, wenn der Rillengrund, im Querschnitt betrachtet, gemäß einer halben Ellipse gekrümmt ist. Wenn die der Krümmung des Rillengrundes zugrundeliegende Ellipse eine in axialer Richtung und eine in radialer Richtung verlaufende Achse aufweist, wobei die Länge der in axialer Richtung verlaufenden Achse zumindest dem Zweifachen der Länge der in radialer Richtung verlaufenden Achse entspricht, können durch den elliptischen Verlauf die eingetragenen Zugspannungen besonders gleichmäßig über den gesamten Rillengrund verteilt werden. Hier dürfte sich auswirken, dass sich eine Ellipse aus kontinuierlich ineinander übergehenden Kreisbögen von Kreisen unterschiedlicher Radien zusammensetzt.

Bei einer bevorzugten Ausführungsform der Erfindung ist der Rillengrund bezüglich seines tiefsten Punktes symmetrisch ausgeführt, wodurch eine besonders gleichmässige Verteilung der Zugspannungen, die infolge der im Betrieb des Reifens unterschiedlich wirkenden Verformungen auftreten, unterstützt wird.

Die Rillenflanken verlaufen bevorzugt in radialer Richtung oder können gegenüber der radialen Richtung unter einem spitzen Winkel von insbesondere bis zu 10° verlaufen, sodass der gegenseitige Abstand der Rillenflanken nach außen größer wird. Besonders bevorzugt ist es, wenn die Übergange der Rillenflanken zu den Außenflächen gerundet ausgeführt sind, wodurch die Kompression durch die Reifenlast im Bereich der Rillenflanken reduziert und auftretende Zugspannungen sowie Verformungserscheinungen (Verformungsamplituden) gering gehalten werden. Die Anfälligkeit der Rillen gegenüber Alterungsrissen und "Groove Cracks" wird dadurch ebenfalls verringert.

Weitere Merkmale, Vorteile und Einzelheiten der Erfindung werden nun anhand der Zeichnung, die Ausführungsbeispiele darstellt, näher erläutert. Dabei zeigen

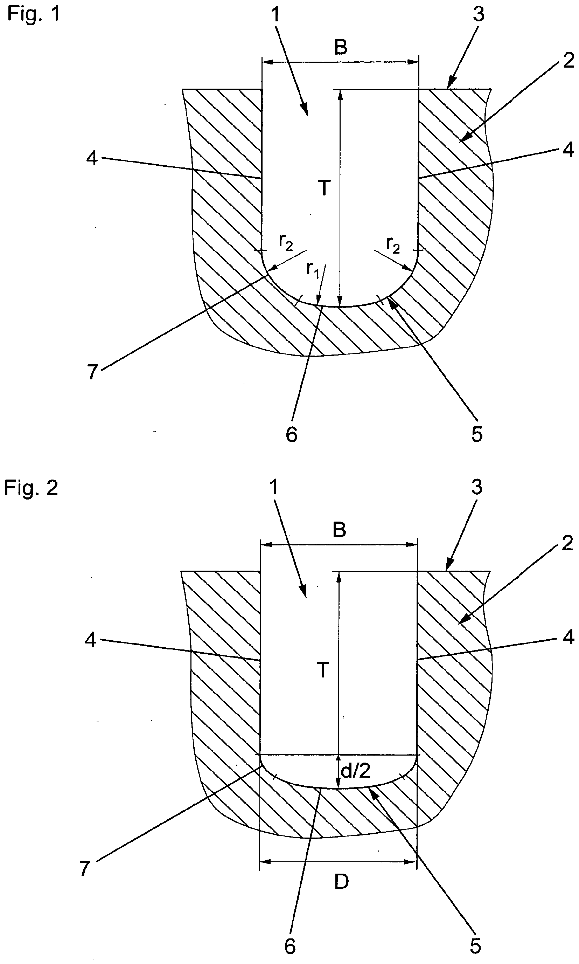

Fig. 1 und Fig. 2 je einen Querschnitt eines Laufstreifens eines Fahrzeugluftreifens im Bereich einer in Umfangsrichtung umlaufenden Rille 1 mit unterschiedlichen Ausführungsvarianten der Erfindung.

In der nachfolgenden Beschreibung und in den Patentansprüchen beziehen sich die Ausführungen zur geometrischen Gestaltung der Rillen auf deren jeweiligen Querschnitt. Erfindungsgemäß ausgeführten Rillen 1 werden insbesondere in Laufstreifen von PKW-, Van- oder Light-Truck-Reifen vorgesehen.

Bei erfindungsgemäß ausgeführten in Umfangsrichtung des Laufstreifens verlaufenden Rillen ist der Grund der Rillen durchgehend gekrümmt, wobei ein spezieller Krümmungsverlauf vorliegt. Unter Krümmung wird an jeder Stelle des Rillengrundes der Kehrwert des Radius jenes Kreises verstanden, welcher dem Krümmungsverlauf am besten angenähert ist.

In Umfangsrichtung des Laufstreifens verlaufende Rillen gliedern, wie an sich bekannt, den Laufstreifen in Profilrippen, Blockreihen und dergleichen und können als gerade in Umfangsrichtung umlaufende Rillen, als zick-zack-förmig in Umfangsrichtung verlaufende Rillen oder als abschnittsweise zur Umfangsrichtung unter einem spitzen Winkel ≤ 45° verlaufende Rillen ausgeführt sein.

Fig. 1 und Fig. 2 zeigen Querschnitte von Rillen 1 und die angrenzenden Bereiche von Profilpositiven 2 und deren Außenflächen 3. Jede Rille 1 ist durch zwei Rillenflanken 4 und einen Rillengrund 5 begrenzt, wobei die Rillen 1 symmetrisch zum Rillengrund 5 ausgeführt sind.

Die Rillen 1 weisen an der Aussenfläche 3 eine Breite B von insbesondere 6,0 mm bis 10,0 mm auf, ihre Tiefe T an der tiefsten Stelle des Rillengrundes 5 beträgt insbesondere 6,0 mm bis 8,5 mm.

Die Rillenflanken 4 verlaufen gerade und parallel zueinander in radialer Richtung zwischen dem Rillengrund 5 und der Außenfläche 3. Sie können jedoch auch abweichend von den dargestellten Ausführungsformen unter einem spitzen Winkel zur radialen Richtung, welcher üblicherweise bis zu 10° beträgt, verlaufen, sodass die Breite der Rille 1 zur Außenfläche 3 größer wird, wobei die Rillenflanken auch unter unterschiedlich großen Winkeln zur radialen Richtung geneigt sein können.

Bei der in Fig. 1 dargestellten Ausführungsform weist der Rillengrund 5 einen zentralen Abschnitt 6 und zwei Übergangsabschnitte 7 auf, welche den zentralen Abschnitt 6 mit den Rillenflanken 4 verbinden. Sowohl der zentrale Abschnitt 6 als auch die Übergangsabschnitte 7 sind entlang von Kreisbögen gekrümmt. Die den Kreisbögen des zentralen Abschnittes 6 und der Übergangsabschnitte 7 zugrundeliegenden Kreise weisen unterschiedliche Radien $r_1$, $r_2$ auf, wobei $r_1 > r_2$, vorzugsweise ist $r_1 \geq 2 \times r_2$. Der Radius $r_1$ des die Krümmung des zentralen Abschnittes 6 bestimmende Kreises beträgt 4,0 mm bis 10,0 mm, insbesondere 3,0 mm bis 7,0 mm. Der zentrale Abschnitt 6 weist somit eine geringere Krümmung als die Übergangsabschnitte 7 auf.

Bei einer nicht dargestellten Ausführungsform der Erfindung können die Übergangsabschnitte 7 entlang mehrerer Kreisbögen gekrümmt sein. Die Radien der Kreise, welche den Kreisbögen der Übergangsabschnitte 7 zugrunde liegen, werden derart gewählt, dass sie mit zunehmender Entfernung der Übergangsabschnitte 7 vom zentralen Abschnitt 6 kleiner werden.

Fig. 2 zeigt eine weitere erfindungsgemäße Ausführungsform der Rille 1, bei welcher der Rillengrund 5, im Querschnitt betrachtet, einem Teil einer Ellipse, insbesondere einer halben Ellipse folgt. Bei einer halben Ellipse weist die zugrundeliegende Ellipse in radialer Richtung ihre kleine Achse mit einer Länge d und in axialer Richtung ihre größere Achse mit einer Länge D auf, wobei bei einer bevorzugten Ausführung $D \geq 2 \times d$. Die Breite B an der Außenfläche 3 der Rille 1 entspricht der Länge D der in axialer Richtung verlaufenden Achse.

Bei einer weiteren nicht dargestellten Ausführungsform kann der Rillengrund im Querschnitt gemäß einer elliptischen Kurve (algebraische Kurve dritter Ordnung) der Formel $y = -1 * \sqrt{(1 - |x^3|)}$ ausgeführt sein, wobei die x-Achse in axialer Richtung verläuft.

Darüber hinaus können die Übergänge der Rillenflanken 4 zur Außenfläche 3 gerundet ausgeführt werden, beispielsweise entlang von Kreisbögen.

**Bezugsziffernliste**

| | |
|---|---|
| 1 | Rille |
| 2 | Profilpositive |
| 3 | Außenfläche |
| 4 | Rillenflanke |
| 5 | Rillengrund |
| 6 | zentraler Abschnitt |
| 7 | Übergangsabschnitt |
| T | Tiefe |
| B | Breite |
| d, D | Achsenlängen |
| $r_1$, $r_2$ | Radien |

**Patentansprüche**

1. Fahrzeugluftreifen in Radialbauart mit einem Laufstreifen mit sich in Umfangsrichtung erstreckenden Profilpositiven (2), welche voneinander durch zumindest eine in Umfangsrichtung umlaufende Rille (1) getrennt sind, welche von zwei einander gegenüberliegenden Rillenflanken (4) und einem die Rillenflanken (4) verbindenden gekrümmten Rillengrund (5) begrenzt sind, wobei, im Querschnitt betrachtet, die Krümmung des Rillengrundes (5) vom tiefsten Punkt des Rillengrundes (5) bis zu den Rillenflanken (4) zunimmt, wobei der Rillengrund (5) einen zentralen Abschnitt (6) und zwei den Rillengrund (5) mit den Rillenflanken (4) verbindende Übergangsabschnitte (7) aufweist, welche Abschnitte (6, 7) entlang von Kreisbögen gekrümmt sind, **dadurch gekennzeichnet,**
**dass** der dem Kreisbogen des zentralen Abschnittes (6) zugrundeliegende Kreis einen Radius ($r_1$) von 4,0 mm bis 10,0 mm aufweist,
wobei dieser Radius ($r_1$) zumindest dem Zweifachen des Radius ($r_2$) des dem Kreisbogen der Übergangsabschnitte (7) zugrundeliegenden Kreises entspricht.

2. Fahrzeugluftreifen in Radialbauart mit einem Laufstreifen mit sich in Umfangsrichtung erstreckenden Profilpositiven (2), welche voneinander durch zumindest eine in Umfangsrichtung umlaufende Rille (1) getrennt sind, welche von zwei einander gegenüberliegenden Rillenflanken (4) und einem die Rillenflanken (4) verbindenden gekrümmten Rillengrund (5) begrenzt sind, wobei, im Querschnitt betrachtet, die Krümmung des Rillengrundes (5) vom tiefsten Punkt des Rillengrundes (5) bis zu den Rillenflanken (4) zunimmt, **dadurch gekennzeichnet,**
**dass** der Rillengrund (5), im Querschnitt betrachtet, gemäß einem Teilstück einer Ellipse gekrümmt ist.

3. Fahrzeugluftreifen nach Anspruch 1, **dadurch gekennzeichnet, dass** der Radius ($r_1$) des Kreises, welcher dem Kreisbogen des zentralen Abschnittes (6) zugrunde liegt, bis zu 7,0 mm beträgt.

4. Fahrzeugluftreifen nach Anspruch 2, **dadurch gekennzeichnet, dass** der Rillengrund (5), im Querschnitt betrachtet, gemäß einer halben Ellipse gekrümmt ist.

**5.** Fahrzeugluftreifen nach Anspruch 2 oder 4, **dadurch gekennzeichnet, dass** die der Krümmung des Rillengrundes (5) zugrundeliegende Ellipse eine in axialer Richtung und eine in radialer Richtung verlaufende Achse aufweist, wobei die Länge der in axialer Richtung verlaufenden Achse zumindest dem Zweifachen der Länge der in radialer Richtung verlaufenden Achse entspricht.

**6.** Fahrzeugluftreifen nach einem der Ansprüche 1 bis 5, **dadurch gekennzeichnet, dass** der Rillengrund (5) bezüglich seines tiefsten Punktes symmetrisch ausgeführt ist.

**7.** Fahrzeugluftreifen nach einem der Ansprüche 1 bis 6, **dadurch gekennzeichnet, dass** die Rillenflanken (4) in radialer Richtung verlaufen.

**8.** Fahrzeugluftreifen nach einem der Ansprüche 1 bis 6, **dadurch gekennzeichnet, dass** die Rillenflanken (4) gegenüber der radialen Richtung unter einem spitzen Winkel von bis zu 10° verlaufen, sodass der gegenseitige Abstand der Rillenflanken (4) zur Aussenfläche (3) des Laufstreifens größer wird.

**9.** Fahrzeugluftreifen nach einem der Ansprüche 1 bis 8, **dadurch gekennzeichnet, dass** die Übergange der Rillenflanken (4) zur Außenfläche (3) des Laufstreifens gerundet ausgeführt sind.

**Claims**

**1.** Pneumatic vehicle tyre of a radial type of construction comprising a tread with profile positives (2) extending in the circumferential direction, which are separated from one another by at least one groove (1) running around in the circumferential direction, which are delimited by two groove flanks (4) opposite each other and a curved groove base (5) connecting the groove flanks (4), wherein, seen in cross section, the curvature of the groove base (5) increases from the lowest point of the groove base (5) to the groove flanks (4), wherein the groove base (5) has a central portion (6) and two transitional portions (7) connecting the groove base (5) to the groove flanks (4), which portions (6, 7) are curved along arcs of a circle, **characterized in that** the circle forming the basis for the arc of a circle of the central portion (6) has a radius ($r_1$) of 4.0 mm to 10 mm, wherein this radius ($r_1$) corresponds to at least twice the radius ($r_2$) of the circle forming the basis for the arc of a circle of the transitional portions (7).

**2.** Pneumatic vehicle tyre of a radial type of construction comprising a tread with profile positives (2) extending in the circumferential direction, which are separated from one another by at least one groove (1) running around in the circumferential direction, which are delimited by two groove flanks (4) opposite each other and a curved groove base (5) connecting the groove flanks (4), wherein, seen in cross section, the curvature of the groove base (5) increases from the lowest point of the groove base (5) to the groove flanks (4), **characterized in that**, seen in cross section, the groove base (5) is curved according to part of an ellipse.

**3.** Pneumatic vehicle tyre according to Claim 1, **characterized in that** the radius ($r_1$) of the circle that forms the basis for the arc of a circle of the central portion (6) is up to 7.0 mm.

**4.** Pneumatic vehicle tyre according to Claim 2, **characterized in that**, seen in cross section, the groove base (5) is curved according to a half ellipse.

**5.** Pneumatic vehicle tyre according to Claim 2 or 4, **characterized in that** the ellipse forming the basis for the curvature of the groove base (5) has an axis running in the axial direction and an axis running in the radial direction, wherein the length of the axis running in the axial direction corresponds to at least twice the length of the axis running in the radial direction.

**6.** Pneumatic vehicle tyre according to one of Claims 1 to 5, **characterized in that** the groove base (5) is designed symmetrically with respect to its lowest point.

**7.** Pneumatic vehicle tyre according to one of Claims 1 to 6, **characterized in that** the groove flanks (4) run in the radial direction.

**8.** Pneumatic vehicle tyre according to one of Claims 1 to 6, **characterized in that** the groove flanks (4) run at an acute angle of up to 10° with respect to the radial direction, so that the distance between the groove flanks (4) becomes greater towards the outer surface (3) of the tread.

**9.** Pneumatic vehicle tyre according to one of Claims 1 to 8, **characterized in that** the transitions of the groove flanks (4) to the outer surface (3) of the tread are designed as rounded.

**Revendications**

**1.** Pneumatique de véhicule du type radial avec une bande de roulement avec des éléments positifs profilés (2) s'étendant en direction périphérique, qui sont séparés les uns des autres par au moins une rainure (1) s'étendant en direction longitudinale, qui est limitée par deux flancs de rainure opposés l'un à l'autre (4) et un fond de rainure courbe (5) reliant les flancs de rainure (4), dans lequel, considérée en coupe transversale, la courbure du fond de rainure (5) augmente depuis le point le plus profond du fond de rainure (5) jusqu'aux flancs de rainure (4), dans lequel le fond de rainure (5) présente une partie centrale (6) et deux parties de transition (7) reliant le fond de rainure (5) aux flancs de rainure (4), parties (6, 7) qui sont courbées en arcs de cercle, **caractérisé en ce que** le cercle générant l'arc de cercle de la partie centrale (6) présente un rayon ($r_1$) de 4,0 mm à 10,0 mm, dans lequel le rayon ($r_1$) correspond au moins au double du rayon ($r_2$) du cercle générant l'arc de cercle des parties de transition (7).

2. Pneumatique de véhicule du type radial avec une bande de roulement avec des éléments positifs profilés (2) s'étendant en direction périphérique, qui sont séparés les uns des autres par au moins une rainure (1) s'étendant en direction longitudinale, qui est limitée par deux flancs de rainure opposés l'un à l'autre (4) et un fond de rainure courbe (5) reliant les flancs de rainure (4), dans lequel, considérée en coupe transversale, la courbure du fond de rainure (5) augmente depuis le point le plus profond du fond de rainure (5) jusqu'aux flancs de rainure (4), **caractérisé en ce que**, considéré en coupe transversale, le fond de rainure (5) est courbé selon une portion d'une ellipse.

3. Pneumatique de véhicule selon la revendication 1, **caractérisé en ce que** le rayon ($r_1$) du cercle, qui génère l'arc de cercle de la partie centrale (6), vaut jusqu'à 7,0 mm.

4. Pneumatique de véhicule selon la revendication 2, **caractérisé en ce que** le fond de rainure (5), considéré en coupe transversale, est incurvé selon une demi-ellipse.

5. Pneumatique de véhicule selon la revendication 2 ou 4, **caractérisé en ce que** l'ellipse générant la courbure du fond de rainure (5) présente un axe orienté en direction axiale et un axe orienté en direction radiale, dans lequel la longueur de l'axe orienté en direction axiale correspond au moins au double de la longueur de l'axe orienté en direction radiale.

6. Pneumatique de véhicule selon l'une quelconque des revendications 1 à 5, **caractérisé en ce que** le fond de rainure (5) est de forme symétrique par rapport à son point le plus profond.

7. Pneumatique de véhicule selon l'une quelconque des revendications 1 à 6, **caractérisé en ce que** les flancs de rainure (4) s'étendent en direction radiale.

8. Pneumatique de véhicule selon l'une quelconque des revendications 1 à 6, **caractérisé en ce que** les flancs de rainure (4) s'étendent sous un angle aigu jusqu'à 10° par rapport à la direction radiale, de telle manière que la distance mutuelle des flancs de rainure (4) à la face extérieure (3) de la bande de roulement soit plus grande.

9. Pneumatique de véhicule selon l'une quelconque des revendications 1 à 8, **caractérisé en ce que** les transitions des flancs de rainure (4) à la face extérieure (3) de la bande de roulement sont de forme arrondie.

Fig. 1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112011105508 T5
- DE 3619149 A1
- DE 102007026653 B4
- EP 2631088 A1
- US 5450885 A
- JP S58136502 A